# EUROPÄISCHE PATENTANMELDUNG

(11) **EP 3 588 146 A1**
(43) Veröffentlichungstag der Anmeldung: **01.01.2020**
(21) Anmeldenummer: 18179605.3
(22) Anmeldetag: 25.06.2018
(51) Int. Cl.: G01T 1/167

(54) **VERFAHREN ZUM MESSEN EINER MATERIALPROBE AUF BETASTRAHLER AUSSENDEND ENERGIEREICHE BETASTRAHLUNG UND VORRICHTUNG ZUM MESSEN EINER MATERIALPROBE AUF BETASTRAHLER AUSSENDEND ENERGIEREICHE BETASTRAHLUNG**

(71) Anmelder: Berthold Technologies GmbH & Co. KG, 75323 Bad Wildbad (DE)
(72) Erfinder: COLLATZ, Rüdiger, 76332 Bad Herrenalb (DE); THOMAS, Tim, 68723 Schwetzingen (DE); JORDAN, David, 37671 Höxter (DE)
(74) Vertreter: Patentanwälte Ruff, Wilhelm, Beier, Dauster & Partner mbB

(57) **Zusammenfassung**

Die Erfindung bezieht sich auf ein Verfahren zum Messen einer Materialprobe (1) auf Betastrahler (2) aussendend energiereiche Betastrahlung (BS) mit einer Betaendpunktenergie (EE) gleich oder höher als ein Betaendpunktenergiegrenzwert (EEG), wobei das Verfahren die Schritte aufweist:
a) Messen einer Intensität (I) oder einer von der Intensität abhängigen Messgröße (Z) von ionisierender Strahlung (IS) aufweisend transmittierte Betastrahlung (tBS) ausgesendet von der Materialprobe (1) durch einen Absorber (10) hindurch, wobei eine Absorber-Dicke (T10) des Absorbers (10) derart ist, dass der Absorber (10) energiereiche Betastrahlung (BS) mindestens teilweise transmittiert und energiearme Betastrahlung (BS') mit einer Betaendpunktenergie (EE') kleiner als der Betaendpunktenergiegrenzwert (EEG) stärker absorbiert als energiereiche Betastrahlung (BS), und
b) Bestimmen einer Aktivität (A) oder einer von der Aktivität abhängigen Bestimmungsgröße (sA) von Betastrahlern (2) aussendend energiereiche Betastrahlung (BS) basierend auf der gemessenen Intensität (I) oder der gemessenen Messgröße (Z).

## Beschreibung

### ANWENDUNGSGEBIET UND STAND DER TECHNIK

Die Erfindung bezieht sich auf ein Verfahren zum Messen einer Materialprobe auf Betastrahler aussendend energiereiche Betastrahlung und eine Vorrichtung zum Messen einer Materialprobe auf Betastrahler aussendend energiereiche Betastrahlung.

### AUFGABE UND LÖSUNG

Der Erfindung liegt als Aufgabe die Bereitstellung eines Verfahrens zum Messen einer Materialprobe auf Betastrahler aussendend energiereiche Betastrahlung und/oder einer Vorrichtung zum Messen einer Materialprobe auf Betastrahler aussendend energiereiche Betastrahlung zugrunde, das und/oder die, insbesondere jeweils, einen relativ einfachen und/oder zeitlich relativ schnellen und somit relativ kostengünstigen Nachweis von Betastrahlern aussendend energiereiche Betastrahlung ermöglichen/ermöglicht.

Die Erfindung löst diese Aufgabe durch die Bereitstellung eines Verfahrens mit den Merkmalen des Anspruchs 1 und/oder einer Vorrichtung mit den Merkmalen des Anspruchs 14. Vorteilhafte Weiterbildungen und/oder Ausgestaltungen der Erfindung sind in den abhängigen Ansprüchen beschrieben.

Das erfindungsgemäße, insbesondere automatische, Verfahren zum Messen beziehungsweise zur Untersuchung beziehungsweise zur Analyse einer Materialprobe auf, insbesondere möglicherweise vorhandene, Betastrahler beziehungsweise Betaemitter aussendend energiereiche Betastrahlung mit einer Betaendpunktenergie, insbesondere einem Wert beziehungsweise Betrag der Betaendpunktenergie, gleich oder höher als ein Betaendpunktenergiegrenzwert weist die Schritte auf: a) Messen, insbesondere automatisches Messen, beziehungsweise Erfassen einer Intensität, insbesondere soweit vorhanden, oder einer von der Intensität abhängigen beziehungsweise auf der Intensität basierenden Messgröße, insbesondere einer Zählrate, insbesondere soweit vorhanden, von, insbesondere transmittierter, ionisierender Strahlung aufweisend transmittierte, insbesondere energiereiche, Betastrahlung, insbesondere von transmittierter, insbesondere energiereicher, Betastrahlung, insbesondere soweit vorhanden, ausgesendet von der Materialprobe, insbesondere von, insbesondere den, Betastrahlern, insbesondere soweit vorhanden, durch einen Absorber hindurch. Eine Absorber-Dicke des Absorbers ist derart, insbesondere ausgebildet beziehungsweise konfiguriert beziehungsweise gewählt, dass der Absorber, insbesondere die, energiereiche Betastrahlung, insbesondere soweit vorhanden, mindestens teilweise transmittiert beziehungsweise durchlässt und energiearme Betastrahlung, insbesondere ausgesendet von anderen Betastrahlern, insbesondere soweit vorhanden, insbesondere in der Materialprobe, mit einer Betaendpunktenergie, insbesondere einem Wert beziehungsweise Betrag der Betaendpunktenergie, kleiner als der Betaendpunktenergiegrenzwert, insbesondere relativ, stärker absorbiert als, insbesondere die, energiereiche Betastrahlung, insbesondere soweit vorhanden. b) Bestimmen, insbesondere automatisches Bestimmen, beziehungsweise Berechnen einer Aktivität oder einer von der Aktivität abhängigen beziehungsweise auf der Aktivität basierenden Bestimmungsgröße von, insbesondere den, Betastrahlern, insbesondere soweit vorhanden, aussendend, insbesondere die, energiereiche Betastrahlung, insbesondere soweit vorhanden, basierend auf der gemessenen Intensität oder der gemessenen Messgröße.

Das Verfahren ermöglicht, insbesondere die, Betastrahler aussendend, insbesondere die, energiereiche Betastrahlung, insbesondere soweit vorhanden, in der Materialprobe relativ einfach und/oder zeitlich relativ schnell und somit relativ kostengünstig nachzuweisen, insbesondere direkt und/oder unmittelbar nach Probennahme vor Ort nachzuweisen, und/oder, insbesondere soweit nicht vorhanden, eine Obergrenze anzugeben. Somit kann das Verfahren ein Messen einer Mehrzahl von Materialproben ermöglichen.

Insbesondere kann/können die Materialprobe und/oder die Mehrzahl von Materialproben beim Rückbau einer kerntechnischen Anlage, insbesondere einem Kernkraftwerk beziehungsweise Kernreaktor, einem Forschungsreaktor, einer Einrichtung zur nuklearen Versorgung und/oder Entsorgung und/oder einer radiomedizinischen Anlage, insbesondere jeweils einschließlich weiterer Anlagenteile- und/oder Einrichtungen, anfallen beziehungsweise entstehen beziehungsweise sich ergeben.

Basierend auf beziehungsweise in Abhängigkeit von der bestimmten Aktivität oder der bestimmten Bestimmungsgröße kann die Materialprobe beziehungsweise ein Anlagenteil, von dem die Materialprobe zeitlich vor dem Messen entnommen worden sein kann, als gefährlicher Abfall beziehungsweise Sonderabfall, insbesondere bei Vorhandensein von, insbesondere den, Betastrahlern aussendend, insbesondere die, energiereiche Betastrahlung, oder als normaler Abfall, insbesondere bei Nicht-Vorhandensein von Betastrahlern, eingestuft beziehungsweise klassifiziert werden.

Insbesondere kann bei Nicht-Vorhandensein von Betastrahlern aussendend energiereiche Betastrahlung die gemessene Intensität oder die gemessene Messgröße Null oder zumindest unter einer Intensitätsnachweisgrenze oder einer Messnachweisgrenze sein beziehungsweise keine Intensität oder keine Messgröße gemessen werden. Somit kann die bestimmte Aktivität oder die bestimmte Bestimmungsgröße Null beziehungsweise unter einer Nachweisgrenze sein beziehungsweise keine Aktivität oder keine Bestimmungsgröße bestimmt werden.

Die Materialprobe braucht für das Messen nicht relativ aufwendig, insbesondere nicht chemisch, aufbereitet beziehungsweise behandelt zu werden oder zu sein. Insbesondere brauchen für das Messen Betastrahler aussendend energiereiche Betastrahlung, insbesondere soweit vorhanden, nicht von, insbesondere anderen, Betastrahlern aussendend energiearme Betastrahlung, insbesondere soweit vorhanden, insbesondere chemisch, getrennt zu werden oder zu sein. In anderen Worten: die Materialprobe braucht nicht chemisch rein zu sein. Anders formuliert: das Verfahren ermöglicht, Betastrahler aussendend energiereiche Betastrahlung, insbesondere soweit vorhanden, ohne chemisches Aufbereiten beziehungsweise Trennen der Materialprobe nachzuweisen.

Insbesondere ermöglicht der Absorber, insbesondere eine Verwendung des Absorbers, ein Trennen energiereicher Betastrahlung, insbesondere soweit vorhanden, von energiearmer Betastrahlung, insbesondere soweit vorhanden. Somit ermöglicht das Verfahren, Betastrahler aussendend energiereiche Betastrahlung, insbesondere soweit vorhanden, nachzuweisen, und insbesondere von, insbesondere anderen, Betastrahlern aussendend energiearme Betastrahlung, insbesondere soweit vorhanden, zu unterscheiden.

Im Detail ist Betastrahlung eine ionisierende Strahlung, die bei einem radioaktiven Zerfall, dem Betazerfall, auftritt. Ein radioaktives Nuklid, das Betastrahlung aussendet, wird als Betastrahler bezeichnet. Die Betastrahlung kann aus Elektronen, der Beta-Minus-Strahlung, und/oder aus Positronen, der Beta-Plus-Strahlung, bestehen. Eine kinetische Energie der ausgesendeten Betateilchen beziehungsweise Betastrahlung ist von Null bis zu einer für den jeweiligen Betazerfall charakteristischen Betaendpunktenergie, insbesondere einem Betaendpunktenergiewert beziehungsweise Maximalwert, kontinuierlich verteilt.

In dem Absorber geben/gibt, insbesondere die, Betateilchen beziehungsweise, insbesondere die, Betastrahlung ihre Energie in vielen Einzelstößen ab, insbesondere an den Absorber. Je nach kinetischer Energie beziehungsweise Betaendpunktenergie können/kann die Betateilchen beziehungsweise die Betastrahlung den Absorber durchqueren beziehungsweise durchdringen oder werden/wird in diesem absorbiert. Insbesondere wird, insbesondere die, energiearme Betastrahlung stärker absorbiert als, insbesondere die, energiereiche Betastrahlung. Somit ermöglicht der Absorber, ein Trennen energiereicher Betastrahlung, insbesondere soweit vorhanden, von energiearmer Betastrahlung, insbesondere soweit vorhanden.

Insbesondere kann mindestens teilweise transmittiert bedeuten, dass der Absorber für energiereiche Betastrahlung einen Transmissionsgrad gleich oder größer als 1 Promille (‰), insbesondere 1 Prozent (%), insbesondere 10 %, und/oder gleich oder kleiner als 50 % aufweisen kann. Zusätzlich oder alternativ kann stärker absorbiert bedeuten, dass der Absorber energiearme Betastrahlung mindestens 1,5-mal, 2-mal, insbesondere 5-mal, insbesondere 10-mal, stärker absorbieren kann als energiereiche Betastrahlung. In anderen Worten: der Absorber kann für energiearme Betastrahlung einen Transmissionsgrad aufweisen, der mindestens 2-imal, insbesondere 5-mal, insbesondere 10-mal, kleiner als ein, insbesondere der, Transmissionsgrad des Absorbers für energiereiche Betastrahlung sein kann. Insbesondere kann der Absorber für energiearme Betastrahlung einen Transmissionsgrad kleiner als 1 % aufweisen, insbesondere 1 %o, insbesondere 0,1 %o. Anders formuliert: die Absorber-Dicke des Absorbers kann derart sein, dass der Absorber energiearme Betastrahlung absorbiert, insbesondere vollständig.

Energiereich kann Betastrahlung mit der Betaendpunktenergie gleich oder höher als der Betaendpunktenergiegrenzwert bezeichnen. Zusätzlich oder alternativ kann energiearm Betastrahlung mit der Betaendpunktenergie kleiner als der Betaendpunktenergiegrenzwert bezeichnen. Weiter zusätzlich oder alternativ können Betastrahler aussendend energiereiche Betastrahlung als Hochenergiebetastrahler bezeichnet werden. Weiter zusätzlich oder alternativ können, insbesondere andere, Betastrahler aussendend energiearme Betastrahlung als Niedrigenergiebetastrahler bezeichnet werden.

Die Aktivität kann als Zerfallsrate bezeichnet werden. Zusätzlich oder alternativ kann die Aktivität eine Anzahl von Kernzerfällen pro Zeitintervall, insbesondere in Becquerel (Bq), von, insbesondere den, Betastrahlern, insbesondere soweit vorhanden, sein.

Die gemessene Intensität oder die gemessene Messgröße kann der Aktivität proportional sein. Somit kann basierend auf der gemessenen Intensität oder der gemessenen Messgröße die Aktivität oder die Bestimmungsgröße bestimmt werden, insbesondere basierend auf einem Kalibrierfaktor, insbesondere für den Absorber.

Falls die gemessene ionisierende Strahlung neben der transmittierten, insbesondere energiereichen, Betastrahlung, insbesondere wenig, andere ionisierende Strahlung, insbesondere energiearme Betastrahlung und/oder Gammastrahlung, aufweisen kann beziehungsweise diese zu der gemessenen Intensität oder der gemessenen Messgröße beitragen kann, braucht dies kein Problem zu sein. Allenfalls kann dies der Aktivität oder der Bestimmungsgröße zugeordnet werden. Somit kann die Aktivität oder die Bestimmungsgröße nicht zu niedrig und somit unsicher sein. In anderen Worten: das Verfahren kann bezüglich der Bestimmung der Aktivität oder der Bestimmungsgröße von, insbesondere den, Betastrahlern, insbesondere soweit vorhanden, aussendend, insbesondere die, energiereiche Betastrahlung, insbesondere soweit vorhanden, abdeckend sein.

Insbesondere kann nur durch den Absorber hindurch transmittierte ionisierende Strahlung, insbesondere Betastrahlung, ausgesendet von der Materialprobe gemessen werden. Anders formuliert: die Materialprobe und/oder der Absorber können/kann derart angeordnet und/oder ausgebildet sein, dass ionisierende Strahlung, insbesondere Betastrahlung, ausgesendet von der Materialprobe zum Messen den Absorber durchqueren beziehungsweise durchdringen braucht beziehungsweise muss, und/oder nicht ohne von dem Absorber transmittiert zu sein beziehungsweise nicht an dem Absorber vorbei gemessen werden kann. Insbesondere kann der Absorber ein Blech sein. Zusätzlich oder alternativ kann die Absorber-Dicke in einer Messrichtung beziehungsweise Durchstrahlungsrichtung sein. Weiter zusätzlich oder alternativ braucht oder sollte oder kann der Absorber keine Strahler, insbesondere Betastrahler, aufweisen.

Die Intensität und/oder die Messgröße und/oder die Absorber-Dicke und/oder die Aktivität und/oder die Bestimmungsgröße können/kann, insbesondere jeweils, einen Wert beziehungsweise Betrag aufweisen oder sein.

Der Schritt b) kann zeitgleich mit dem Schritt a) und/oder zeitlich nach diesem ausgeführt werden.

Das Verfahren kann zum Messen der Materialprobe auf, insbesondere verschiedene, Betastrahler aussendend, insbesondere verschiedene, energiereiche Betastrahlung mit einer, insbesondere verschiedenen, Betaendpunktenergie gleich oder höher als ein, insbesondere verschiedener, Betaendpunktenergiegrenzwert, insbesondere mehrfach, ausgeführt beziehungsweise wiederholt werden, insbesondere mit einem, insbesondere verschiedenen Absorber, insbesondere mit einer, insbesondere verschiedenen, Absorber-Dicke. Insbesondere kann/können dabei insbesondere beim Bestimmen, die, insbesondere verschiedene/n, gemessene/n Intensität/en oder die, insbesondere verschiedene/n, gemessene/n Messgröße/n oder die, insbesondere verschiedene/n, bestimmte/n Aktivität/en oder die, insbesondere verschiedene/n, bestimmte/n Bestimmungsgröße/n, insbesondere jeweils beziehungsweise gegenseitig, berücksichtigt werden. Zusätzlich oder alternativ kann mit dem Messen der Materialprobe auf Betastrahler aussendend energiereiche Betastrahlung mit der relativ höchsten Betaendpunktenergie beziehungsweise mit dem relativ dicksten Absorber angefangen werden. Weiter zusätzlich oder alternativ kann beim Messen der Materialprobe auf Betastrahler aussendend energiereiche Betastrahlung mit der relativ höchsten Betaendpunktenergie Betastrahlung mit der relativ nächst niedrigeren Betaendpunktenergie als energiearme Betastrahlung behandelt beziehungsweise angesehen werden. Weiter zusätzlich oder alternativ kann mit dem Messen der Materialprobe auf Betastrahler aussendend energiereiche Betastrahlung mit der relativ nächst niedrigeren Betaendpunktenergie beziehungsweise mit dem relativ nächst dünneren Absorber zeitlich fortgesetzt werden, insbesondere usw. Weiter zusätzlich oder alternativ kann beim Messen der Materialprobe auf Betastrahler aussendend energiereiche Betastrahlung mit der relativ nächst niedrigeren Betaendpunktenergie Betastrahlung mit der, insbesondere wiederum, relativ nächst niedrigeren Betaendpunktenergie als energiearme Betastrahlung behandelt beziehungsweise angesehen werden, insbesondere usw.

In einer Weiterbildung der Erfindung ist das Verfahren zum Messen der Materialprobe auf, insbesondere möglicherweise vorhandenes, Yttrium-90 und/oder, insbesondere möglicherweise vorhandenes, Kalium-40. Das Messen der Materialprobe auf Yttrium-90, insbesondere soweit vorhanden, ermöglicht, Strontium-90, insbesondere soweit vorhanden, nachzuweisen und/oder, insbesondere soweit nicht vorhanden, eine Obergrenze anzugeben. Insbesondere zerfällt Strontium-90 mit einer Halbwertzeit von 28 Jahren zu Yttrium-90. Yttrium-90 zerfällt mit einer Halbwertszeit von 64 Stunden unter Aussendung von, insbesondere energiereicher, Betastrahlung mit einer, insbesondere ungewöhnlich hohen beziehungsweise einzigartigen, Betaendpunktenergie von 2282 Kiloelektronenvolt (keV). Somit können in der, insbesondere unbehandelten, Materialprobe Strontium-90 und Yttrrium-90, soweit vorhanden, im Gleichgewicht sein. Des Weiteren gibt es praktisch keine langlebigen Nuklide mit ähnlich hoher oder gar höherer Betaendpunktenergie. Außerdem ist Strontium-90 eines der häufigsten Spaltprodukte von Uran-235 beziehungsweise kerntechnischer Anlagen überhaupt. Kalium-40 zerfällt unter Aussendung von, insbesondere energiereicher, Betastrahlung, insbesondere Beta-Plus-Strahlung, mit einer Betaendpunktenergie von 1504,9 keV und, insbesondere Beta-Minus-Strahlung, mit einer Betaendpunktenergie von 1311 keV. Insbesondere kann das Verfahren zum Messen der Materialprobe auf Yttrium-90, insbesondere mit der relativ höchsten Betaendpunktenergie, und Kalium-40, insbesondere mit der relativ nächst niedrigeren Betaendpunktenergie, insbesondere mehrfach, ausgeführt beziehungsweise wiederholt werden. Zusätzlich oder alternativ kann mit dem Messen der Materialprobe auf Ytrrium-90 zeitlich angefangen werden und, insbesondere bei Nicht-Vorhandensein von Yttrium-90, mit dem Messen der Materialprobe auf Kalium-40 zeitlich fortgesetzt werden.

In einer Weiterbildung der Erfindung ist der Betaendpunktenergiegrenzwert minimal 1175 keV, insbesondere minimal 1200 keV, insbesondere minimal 1300 keV, insbesondere minimal 1505 keV, insbesondere minimal 1600 keV, insbesondere minimal 1800 keV, insbesondere minimal 2000 keV, und/oder maximal 2200 keV. Der Betaendpunktenergiegrenzwert von minimal 1175keV ermöglicht, Yttrium-90 und/oder Kalium-40, insbesondere soweit vorhanden, nachzuweisen, und insbesondere von, insbesondere anderen, Betastrahlern aussendend energiearme Betastrahlung wie Caesium-137, insbesondere soweit vorhanden, zu unterscheiden. Der Betaendpunktenergiegrenzwert von minimal 1505 keV ermöglicht, Yttrium-90, insbesondere soweit vorhanden, nachzuweisen, und insbesondere von, insbesondere anderen, Betastrahlern aussendend energiearme Betastrahlung wie Kalium-40 und/oder Caesium-137, insbesondere soweit vorhanden, zu unterscheiden. Insbesondere zerfällt Caesium-137 mit einer Halbwertzeit von 30 Jahren unter Aussendung von, insbesondere energiearmer, Betastrahlung mit einer Betaendpunktenergie von 1174 keV und einer Betaendpunktenergie von 512 keV. Des Weiteren ist Caesium-137 eines der häufigsten Spaltprodukte von Uran-235 beziehungsweise kerntechnischer Anlagen überhaupt.

In einer Weiterbildung der Erfindung weist das Verfahren den Schritt auf: Messen, insbesondere automatisches Messen, beziehungsweise Erfassen einer anderen Intensität, insbesondere soweit vorhanden, oder einer anderen von der anderen Intensität abhängigen beziehungsweise auf der anderen Intensität basierenden Messgröße, insbesondere einer anderen Zählrate, insbesondere soweit vorhanden, von, insbesondere transmittierter, ionisierender Strahlung, insbesondere aufweisend transmittierte Gammastrahlung, insbesondere von transmittierter Gammastrahlung, insbesondere soweit vorhanden, ausgesendet von der Materialprobe, insbesondere von Gammastrahlern, insbesondere soweit vorhanden, durch einen anderen Absorber hindurch. Eine andere Absorber-Dicke des anderen Absorbers ist derart dicker als die Absorber-Dicke des Absorbers, insbesondere ausgebildet beziehungsweise konfiguriert beziehungsweise gewählt, dass der andere Absorber, insbesondere die, energiereiche Betastrahlung, insbesondere soweit vorhanden, absorbiert, insbesondere vollständig, und, insbesondere die, Gammastrahlung, insbesondere soweit vorhanden, mindestens teilweise transmittiert beziehungsweise durchlässt. Der Schritt b) weist auf: Bestimmen, insbesondere automatisches Bestimmen, der Aktivität oder der von der Aktivität abhängigen Bestimmungsgröße von, insbesondere den, Betastrahlern, insbesondere soweit vorhanden, aussendend, insbesondere die, energiereiche Betastrahlung, insbesondere soweit vorhanden, berücksichtigend, insbesondere subtrahierend, die gemessene andere Intensität oder die gemessene andere Messgröße.

Dies beziehungsweise der andere Absorber ermöglicht, ein Trennen, insbesondere der, Gammastrahlung, insbesondere soweit vorhanden, von, insbesondere der, energiereichen Betastrahlung, insbesondere soweit vorhanden. Somit ermöglicht das Verfahren, insbesondere die, Betastrahler aussendend energiereiche Betastrahlung, insbesondere soweit vorhanden, nachzuweisen, und insbesondere von Gammastrahlern aussendend Gammastrahlung, insbesondere soweit vorhanden, zu unterscheiden beziehungsweise deren Beitrag, insbesondere soweit vorhanden, zu der gemessenen Intensität oder der gemessenen Messgröße zu berücksichtigen. Somit ermöglicht das Verfahren eine relativ genaue Bestimmung der Aktivität oder der Bestimmungsgröße.

Caesium-137, insbesondere soweit vorhanden, kann ein, insbesondere der, Gammastrahler sein beziehungsweise, insbesondere die, Gammastrahlung aussenden.

Bei Nicht-Vorhandensein von Gammastrahlern aussendend Gammastrahlung kann die gemessene andere Intensität oder die gemessene andere Messgröße Null oder zumindest unter einer Intensitätsnachweisgrenze oder einer Messnachweisgrenze sein beziehungsweise keine andere Intensität oder keine andere Messgröße gemessen werden.

Insbesondere kann mindestens teilweise transmittiert bedeuten, dass der andere Absorber für Gammastrahlung einen Transmissionsgrad gleich oder größer als 1 %o, insbesondere 1 %, insbesondere 10 %, und/oder gleich oder kleiner als 50 % aufweisen kann. Zusätzlich oder alternativ kann der andere Absorber für energiereiche Betastrahlung einen Transmissionsgrad kleiner als 1 % aufweisen, insbesondere 1 %o, insbesondere 0,1 %o.

Die andere Intensität und/oder die andere Messgröße und/oder die andere Absorber-Dicke, insbesondere jeweils, einen Wert beziehungsweise Betrag aufweisen oder sein.

Beim Berücksichtigen kann ein Dickenfaktor zur Berücksichtigung der Absorber-Dicke und der anderen Absorber-Dicke und/oder eines Unterschieds zwischen der Absorber-Dicke und der anderen Absorber-Dicke berücksichtigt werden.

Der andere Absorber kann den Absorber und einen zusätzlichen Absorber aufweisen.

In einer Weiterbildung der Erfindung ist die Absorber-Dicke des Absorbers minimal 0,5 Millimeter (mm), insbesondere minimal 1 mm, und/oder maximal 4 mm, insbesondere maximal 3 mm, insbesondere 2 mm. Zusätzlich oder alternativ ist die andere Absorber-Dicke des anderen Absorbers, soweit vorhanden, dicker als 4 mm, insbesondere minimal 5 mm, und/oder maximal 8 mm, insbesondere maximal 7 mm, insbesondere 6 mm.

In einer Weiterbildung der Erfindung bestehen/besteht der Absorber und/oder der andere Absorber, soweit vorhanden, teilweise oder vollständig aus Aluminium und/oder Kupfer bestehen. Insbesondere kann das Aluminium Reinstaluminium sein und/oder eine Reinheit von 99,999 % Prozent aufweisen.

In einer Weiterbildung der Erfindung ist eine Proben-Dicke der Materialprobe minimal 0,1 mm, insbesondere minimal 0,2 mm, und/oder maximal 2 mm, insbesondere maximal 1 mm, insbesondere 0,5 mm. Dies ermöglicht eine Eigenabsorption von Betastrahlung durch die Materialprobe zu reduzieren oder sogar ganz zu vermeiden. Somit kann die gemessene Intensität oder die gemessene Messgröße der Aktivität proportional sein. Insbesondere kann die Proben-Dicke in einer, insbesondere der, Messrichtung beziehungsweise Durchstrahlungsrichtung sein.

In einer Weiterbildung der Erfindung ist eine Proben-Fläche der Materialprobe minimal 2000 Quadratmillimeter (mm²) und/oder maximal 100000 mm². Insbesondere kann die Proben-Fläche orthogonal zu einer, insbesondere der, Messrichtung beziehungsweise Durchstrahlungsrichtung sein.

In einer Weiterbildung der Erfindung weist das Verfahren den Schritt auf: Bestimmen, insbesondere automatisches Bestimmen, beziehungsweise Erfassen beziehungsweise Messen beziehungsweise Wiegen einer Proben-Masse der Materialprobe. Der Schritt b) weist auf: Bestimmen, insbesondere automatisches Bestimmen, beziehungsweise Berechnen einer spezifischen Aktivität oder einer von der spezifischen Aktivität abhängigen beziehungsweise auf der spezifischen Aktivität basierenden Bestimmungsgröße von, insbesondere den, Betastrahlern, insbesondere soweit vorhanden, aussendend, insbesondere die, energiereiche Betastrahlung, insbesondere soweit vorhanden, basierend auf der bestimmten Proben-Masse. Insbesondere kann die spezifische Aktivität ein Verhältnis der Aktivität zur Proben-Masse der Materialprobe sein. Zusätzlich oder alternativ kann die Proben-Masse einen Wert beziehungsweise Betrag aufweisen oder sein.

In einer Weiterbildung der Erfindung weist das Verfahren die Schritte auf: c) Vergleichen, insbesondere automatisches Vergleichen, der bestimmten Aktivität oder der von der Aktivität abhängigen Bestimmungsgröße mit einem Freigabegrenzwert. d) bei Unterschreitung oder Erreichung des Freigabegrenzwerts durch die Aktivität oder die von der Aktivität abhängigen Bestimmungsgröße Freigeben, insbesondere automatisches Freigeben, der Materialprobe, insbesondere als normaler Abfall, und/oder bei Überschreitung des Freigabegrenzwerts durch die Aktivität oder die von der Aktivität abhängigen Bestimmungsgröße Nicht-Freigeben, insbesondere automatisches Nicht-Freigeben, der Materialprobe, insbesondere als gefährlicher Abfall beziehungsweise Sonderabfall. Insbesondere kann von der Aktivität abhängige Bestimmungsgröße die spezifische Aktivität, soweit vorhanden, sein.

In einer Ausgestaltung der Erfindung ist der, insbesondere uneingeschränkte, Freigabegrenzwert 0,6 Becquerel pro Gramm (Bq/g), insbesondere für Bauschutt und/oder Bodenaushub von mehr als 1000 Tonnen pro Jahr (t/a).

In einer Weiterbildung der Erfindung weist das Verfahren den Schritt auf: Bestimmen, insbesondere automatisches Bestimmen, beziehungsweise Ermitteln eines, insbesondere des, Kalibrierfaktors für den Absorber mit der Absorber-Dicke. Der Schritt b) weist auf: Bestimmen, insbesondere automatisches Bestimmen, der Aktivität oder der von der Aktivität abhängigen Bestimmungsgröße von Betastrahlern, insbesondere soweit vorhanden, aussendend, insbesondere die, energiereiche Betastrahlung, insbesondere soweit vorhanden, basierend auf dem bestimmten Kalibrierfaktor. Dies ermöglicht die Aktivität oder die Bestimmungsgröße quantitativ zu bestimmen. Insbesondere kann der Kalibrierfaktor durch Messen einer, insbesondere von der Materialprobe verschieden Kalibrierprobe, beziehungsweise eines Kalibrierpräparats, insbesondere mit einer bekannten Kalibrieraktivität beziehungsweise Kalibrierbestimmungsgröße, gemessen werden. Insbesondere kann die Kalibrierprobe entweder, insbesondere nur, Strontium-90/Yttrium-90 oder, insbesondere nur, Kalium-40, oder, insbesondere nur, Caesium-137 aufweisen. Zusätzlich oder alternativ kann der Kalibrierfaktor einen Wert beziehungsweise Betrag aufweisen oder sein.

In einer Weiterbildung der Erfindung ist die Materialprobe in Form von Pulver. Das Pulver ist mittels einer beziehungsweise durch eine Folie fixiert. Dies beziehungsweise das Pulver ermöglicht eine beliebige Form der Materialprobe. Des Weiteren ermöglicht dies beziehungsweise die Folie, dass die Materialprobe ihre Form beibehalten kann. Insbesondere kann das Pulver gemahlen sein, insbesondere von einer Kugelmühle. Zusätzlich oder alternativ kann die Folie eine, insbesondere handelsübliche, Haushaltsfolie beziehungsweise Adhäsionsfolie sein. Weiter zusätzlich oder alternativ kann eine Folien-Dicke der Folie im 0,01 mm-Bereich sein. Somit kann die Folie gegenüber dem Absorber, insbesondere bezüglich Absorption, vernachlässigt werden. In anderen Worten: die Folie kann ionisierende Strahlung, insbesondere Betastrahlung, mindestens teilweise, insbesondere vollständig, transmittieren.

Des Weiteren bezieht sich die Erfindung auf eine, insbesondere automatische und/oder elektrische, Vorrichtung zum Messen einer, insbesondere der, Materialprobe auf, insbesondere die, Betastrahler, insbesondere soweit vorhanden, aussendend, insbesondere die, energiereiche Betastrahlung, insbesondere soweit vorhanden, mit einer, insbesondere der, Betaendpunktenergie gleich oder höher als ein, insbesondere der, Betaendpunktenergiegrenzwert. Die erfindungsgemäße Vorrichtung weist auf: einen, insbesondere den, Absorber, eine, insbesondere elektrische, Messeinrichtung und eine, insbesondere elektrische, Bestimmungseinrichtung. Eine, insbesondere die, Absorber-Dicke des Absorbers ist derart, insbesondere ausgebildet, dass der Absorber, insbesondere die, energiereiche Betastrahlung, insbesondere soweit vorhanden, mindestens teilweise transmittiert und, insbesondere die, energiearme Betastrahlung, insbesondere soweit vorhanden, mit einer, insbesondere der, Betaendpunktenergie kleiner als der Betaendpunktenergiegrenzwert, insbesondere relativ, stärker absorbiert als, insbesondere die, energiereiche Betastrahlung, insbesondere soweit vorhanden. Die Messeinrichtung ist zum Messen, insbesondere zum automatischen Messen, einer, insbesondere der, Intensität, insbesondere soweit vorhanden, oder einer, insbesondere der, von der Intensität abhängigen Messgröße, insbesondere einer Zählrate, insbesondere soweit vorhanden, von, insbesondere der, ionisierender Strahlung, insbesondere soweit vorhanden, aufweisend, insbesondere die, transmittierte Betastrahlung, insbesondere soweit vorhanden, ausgesendet von der Materialprobe durch den Absorber hindurch ausgebildet beziehungsweise konfiguriert. Die Bestimmungseinrichtung ist zum Bestimmen, insbesondere zum automatischen Bestimmen, einer, insbesondere der, Aktivität oder einer, insbesondere der, von der Aktivität abhängigen Bestimmungsgröße von, insbesondere den, Betastrahlern, insbesondere soweit vorhanden, aussendend, insbesondere die, energiereiche Betastrahlung, insbesondere soweit vorhanden, basierend auf der gemessenen Intensität oder der gemessenen Messgröße ausgebildet beziehungsweise konfiguriert.

Die Vorrichtung kann die gleichen Vorteile ermöglichen wie das zuvor beschriebene Verfahren. Insbesondere kann die Vorrichtung, insbesondere ihr Absorber, teilweise oder sogar ganz ausgebildet sein, wie für das Verfahren zuvor beschrieben. Zusätzlich oder alternativ kann die Vorrichtung zum Ausführen, insbesondere zum automatischen Ausführen, von Teilen des zuvor beschriebenen Verfahrens oder sogar des ganzen Verfahrens ausgebildet sein.

Insbesondere kann die Vorrichtung einen Low-Level Messplatz aufweisen oder sein. Zusätzlich oder alternativ kann die Messeinrichtung einen Strahlungsdetektor, insbesondere ein Zählrohr, insbesondere ein Proportional-Zählrohr, aufweisen oder sein. Weiter zusätzlich oder alternativ können die Materialprobe, der Absorber und die Messeinrichtung, insbesondere in dieser Reihenfolge, angeordnet sein, insbesondere entlang einer, insbesondere der, Messrichtung beziehungsweise Durchstrahlungsrichtung. Weiter zusätzlich oder alternativ kann die Bestimmungseinrichtung einen Prozessor, insbesondere einen Mikroprozessor, und/oder einen Speicher aufweisen oder sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch ein erfindungsgemäßes Verfahren zum Messen einer Materialprobe auf Betastrahler aussendend energiereiche Betastrahlung und eine Vorrichtung zum Messen einer Materialprobe auf Betastrahler aussendend energiereiche Betastrahlung mit der Materialprobe und mit einem Absorber,
- Fig. 2: schematisch das erfindungsgemäße Verfahren mit der Materialprobe und mit einem anderen Absorber,
- Fig. 3: schematisch das erfindungsgemäße Verfahren mit einer Kalibrierprobe und mit dem Absorber,
- Fig. 4: schematisch das erfindungsgemäße Verfahren ohne Probe und mit dem Absorber,
- Fig. 5: schematisch Betaspektren von Yttrium-90, Kalium-40 und Caesium-137, und
- Fig. 6: schematisch Intensitäten als Funktion einer Absorber-Dicke von Kalibrierproben von Strontium-90/Yttrium-90, Kalium-40, Caesium-137 und eingedampftem Modellabwasser.

### DETAILLIERTE BESCHREIBUNG DER AUSFÜHRUNGSBEISPIELE

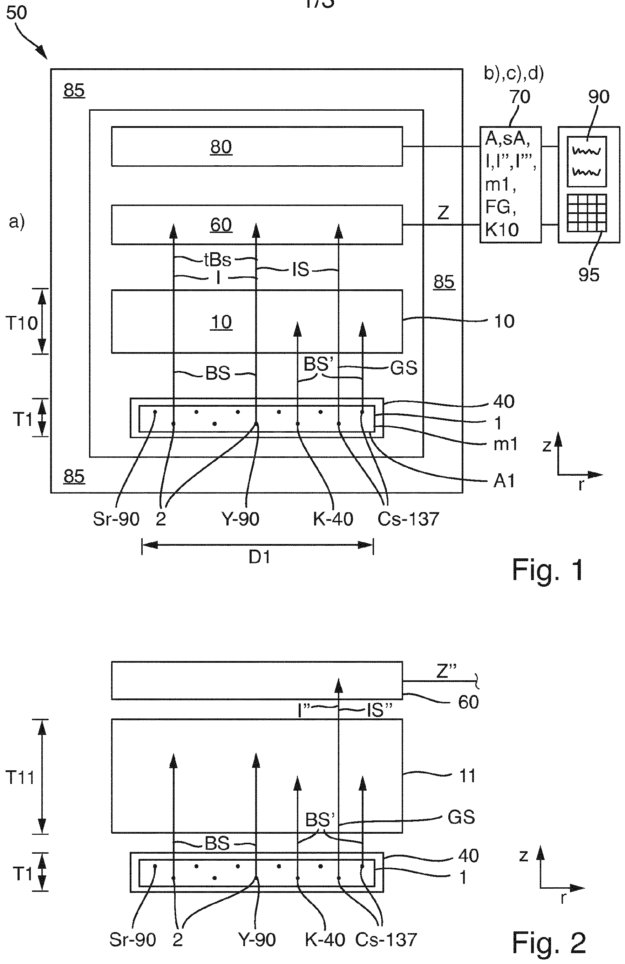

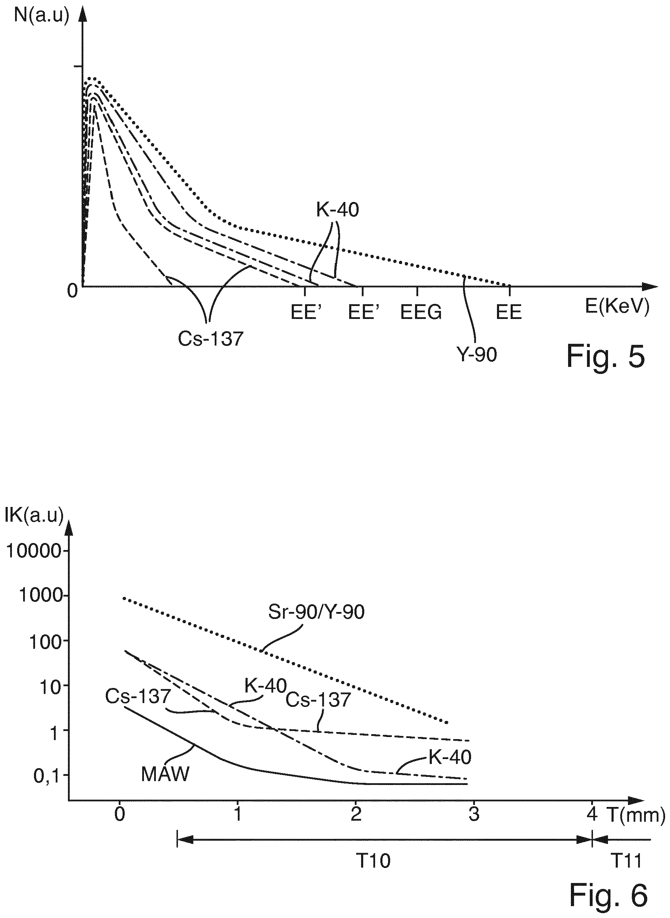

Fig. 1 zeigt eine erfindungsgemäße Vorrichtung 50 zum Messen einer Materialprobe 1 auf Betastrahler 2 aussendend energiereiche Betastrahlung BS mit einer Betaendpunktenergie EE gleich oder höher als ein Betaendpunktenergiegrenzwert EEG, wie in Fig. 5 gezeigt. Die Vorrichtung 50 weist einen Absorber 10, eine Messeinrichtung 60 und eine Bestimmungseinrichtung 70 auf. Eine Absorber-Dicke T10, insbesondere in einer Messrichtung z, des Absorbers 10 ist derart, dass der Absorber 10 energiereiche Betastrahlung BS mindestens teilweise transmittiert und energiearme Betastrahlung BS' mit einer Betaendpunktenergie EE' kleiner als der Betaendpunktenergiegrenzwert EEG, wie in Fig. 5 gezeigt, stärker absorbiert als energiereiche Betastrahlung BS, wie in Fig. 6 gezeigt. Die Messeinrichtung 60 ist zum Messen einer Intensität I oder einer von der Intensität abhängigen Messgröße, insbesondere einer Zählrate Z, von, insbesondere transmittierter, ionisierender Strahlung IS aufweisend transmittierte Betastrahlung tBS ausgesendet von der Materialprobe 1 durch den Absorber 10 hindurch ausgebildet. Die Bestimmungseinrichtung 70 ist zum Bestimmen einer Aktivität A oder einer von der Aktivität abhängigen Bestimmungsgröße sA von Betastrahlern 2 aussendend energiereiche Betastrahlung BS basierend auf der gemessenen Intensität I oder der gemessenen Messgröße beziehungsweise Zählrate Z ausgebildet.

Des Weiteren zeigen Fig. 1 bis 4 ein erfindungsgemäßes Verfahren zum Messen der Materialprobe 1 auf Betastrahler 2 aussendend energiereiche Betastrahlung BS mit der Betaendpunktenergie EE gleich oder höher als der Betaendpunktenergiegrenzwert EEG, insbesondere mittels der Vorrichtung 50. Das Verfahren weist die Schritte auf: a) Messen der Intensität I oder der von der Intensität abhängigen Messgröße, insbesondere der Zählrate Z, von, insbesondere transmittierter, ionisierender Strahlung IS aufweisend transmittierte Betastrahlung tBS ausgesendet von der Materialprobe 1 durch den Absorber 10 hindurch. Die Absorber-Dicke T10, insbesondere in der Messrichtung z, des Absorbers ist derart, dass der Absorber 10 energiereiche Betastrahlung BS mindestens teilweise transmittiert und energiearme Betastrahlung BS' mit der Betaendpunktenergie EE' kleiner als der Betaendpunktenergiegrenzwert EEG stärker absorbiert als energiereiche Betastrahlung BS. b) Bestimmen der Aktivität A oder der von der Aktivität abhängigen Bestimmungsgröße sA von Betastrahlern 2 aussendend energiereiche Betastrahlung BS basierend auf der gemessenen Intensität I oder der gemessenen Messgröße beziehungsweise Zählrate Z.

Insbesondere ist die Vorrichtung 50 zum Ausführen des Verfahrens ausgebildet.

Im Detail ist das Verfahren zum Messen der Materialprobe 1 auf Yttrium-90 Y-90, und insbesondere somit auf Strontium-90 Sr-90. In alternativen Ausführungsbeispielen kann das Verfahren zusätzlich oder alternativ zum Messen der Materialprobe auf Kalium-40 K-40 sein.

Im gezeigten Ausführungsbeispiel ist der Betaendpunktenergiegrenzwert EEG minimal 1505 keV. In alternativen Ausführungsbeispielen kann der Betaendpunktenergiegrenzwert minimal 1175 keV sein.

Wie in Fig. 5 gezeigt, ist die Betaendpunktenergie EE von Y-90 mit 2282 keV höher als der Betaendpunktenergiegrenzwert EEG mit 1505 keV. Die Betaendpunktenergie EE' von K-40 mit 1504,9 keV ist kleiner als der Betaendpunktenergiegrenzwert EEG mit 1505 keV. Weiter ist die Betaendpunktenergie EE' von Caesium-137 Cs-137 mit 1174 keV kleiner als der Betaendpunktenergiegrenzwert EEG mit 1505 keV.

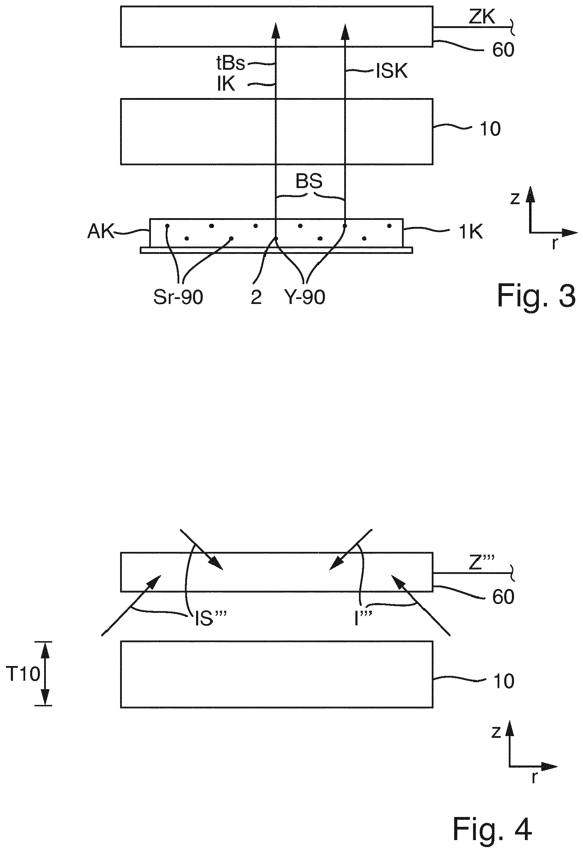

Wie in Fig. 6 gezeigt, nimmt eine, insbesondere gemessene, Kalibrierintensität IK einer, insbesondere jeweiligen, Kalibrierprobe 1K, wie in Fig. 3 gezeigt, von Sr-90/Y-90, K-40, Cs-137 oder eingedampftem Modellabwasser MAW mit zunehmender Absorber-Dicke T10 ab. Insbesondere nehmen die Kalibrierintensitäten IK von K-40, Cs-137 und MAW stärker ab als die Kalibrierintensität von Sr-90/Y-90. Der Absorber 10 absorbiert energiearme Betastrahlung BS' von K-40, Cs-137 und MAW stärker als energiereiche Betastrahlung BS von Sr-90/Y-90.

Im Detail nimmt die Kalibrierintensität IK von Sr-90/Y-90 pro 1 mm Absorber-Dicke T10 um 1 Größenordnung ab, insbesondere bis mindestens 3 mm. Die Kalibrierintensität IK von K-40 nimmt pro 1 mm Absorber-Dicke T10 um 1,5 Größenordnungen ab, insbesondere bis 2 mm. Ab 2 mm trägt, insbesondere hauptsächlich, Gammastrahlung zu der Kalibrierintensität IK von K-40 bei. Die Kalibrierintensität IK von Cs-137 nimmt pro 1 mm Absorber-Dicke T10 um 2 Größenordnungen ab, insbesondere bis 1 mm. Ab 1 mm trägt, insbesondere hauptsächlich, Gammastrahlung zu der Kalibrierintensität IK von Cs-137 bei. Die Kalibrierintensität IK von MAW nimmt pro 1 mm Absorber-Dicke T10 um 1,5 Größenordnungen ab, insbesondere bis 1 mm. Ab 1 mm trägt, insbesondere hauptsächlich, Gammastrahlung zu der Kalibrierintensität IK von MAW bei.

Im gezeigten Ausführungsbeispiel ist die Absorber-Dicke T10 des Absorbers 10 2 mm. In alternativen Ausführungsbeispielen kann die Absorber-Dicke des Absorbers minimal 0,5 mm und/oder maximal 4 mm sein.

Zudem sind im gezeigten Ausführungsbeispiel in der Materialprobe 1 Betastrahler 2, insbesondere Sr-90/Y-90, aussendend energiereiche Betastrahlung BS mit der Betaendpunktenergie EE, insbesondere 2282 keV, gleich oder höher als der Betaendpunktenergiegrenzwert EEG, insbesondere 1505 keV, vorhanden, wie in Fig. 1 und 2 gezeigt.

Der Absorber 10 transmittiert die energiereiche Betastrahlung BS mindestens teilweise, insbesondere mit einem Transmissionsgrad gleich oder größer als 1 %, wie in Fig. 1 gezeigt.

Des Weiteren sind in der Materialprobe 1 Betastrahler, insbesondere K-40 und Cs-137, aussendend energiearme Betastrahlung BS' mit der Betaendpunktenergie EE', insbesondere 1504,9 keV und 1174 keV, kleiner als der Betaendpunktenergiegrenzwert EEG, insbesondere 1505 keV, vorhanden.

Der Absorber 10 absorbiert die energiearme Betastrahlung BS' stärker als die energiereiche Betastrahlung BS, insbesondere absorbiert der Absorber 10 die energiearme Betastrahlung BS' vollständig.

Außerdem transmittiert der Absorber 10 Gammastrahlung GS, insbesondere von Cs-137, mindestens teilweise.

Somit weist die gemessene ionisierende Strahlung IS neben der transmittierten, insbesondere energiereichen, Betastrahlung BS, insbesondere wenig, Gammastrahlung GS auf beziehungsweise diese trägt zu der gemessenen Intensität I oder der gemessenen Messgröße beziehungsweise Zählrate Z bei. Somit kann die Bestimmung der Aktivität A oder der Bestimmungsgröße sA von Betastrahlern 2, insbesondere Sr-90/Y-90, aussendend energiereiche Betastrahlung BS abdeckend sein. Jedoch trägt die Gammastrahlung GS kaum bei und somit kann die Bestimmung der Aktivität A oder der Bestimmungsgröße sA von Betastrahlern 2, insbesondere Sr-90/Y-90, aussendend energiereiche Betastrahlung BS, insbesondere bereits nur mit dem Messen der Materialprobe 1 mit dem Absorber 10, relativ genau sein.

Weiter weist das Verfahren den Schritt auf: Messen einer anderen Intensität I" oder einer anderen von der anderen Intensität abhängigen Messgröße, insbesondere einer anderen Zählrate Z", von, insbesondere transmittierter, ionisierender Strahlung IS", ausgesendet von der Materialprobe 1 durch einen anderen Absorber 11 hindurch, insbesondere mittels der Vorrichtung 50 beziehungsweise ihrer Messeinrichtung 60, wie in Fig. 2 gezeigt. Eine andere Absorber-Dicke T11, insbesondere in der Messrichtung z, des anderen Absorbers 11 ist derart dicker als die Absorber-Dicke T10 des Absorbers 10, dass der andere Absorber 11 energiereiche Betastrahlung, insbesondere von Y-90, absorbiert und Gammastrahlung GS, insbesondere von Cs-137, mindestens teilweise transmittiert. Der Schritt b) weist auf: Bestimmen der Aktivität A oder der von der Aktivität abhängigen Bestimmungsgröße sA von Betastrahlern 2, insbesondere Sr-90/Y-90, aussendend energiereiche Betastrahlung BS berücksichtigend die gemessene andere Intensität I" oder die gemessene andere Messgröße beziehungsweise andere Zählrate Z", insbesondere mittels der Vorrichtung 50 beziehungsweise ihrer Bestimmungseinrichtung 70.

Zudem ist im gezeigten Ausführungsbeispiel die andere Absorber-Dicke T11 des anderen Absorbers 11 6 mm. In alternativen Ausführungsbeispielen kann die andere Absorber-Dicke des anderen Absorbers dicker als 4mm und/oder maximal 8 mm sein.

Der andere Absorber 11 absorbiert die energiereiche Betastrahlung BS und die energiearme Betastrahlung BS', insbesondere vollständig, wie in Fig. 2 gezeigt.

Des Weiteren transmittiert der andere Absorber 11 die Gammastrahlung GS, insbesondere von Cs-137, mindestens teilweise.

Somit weist die gemessene ionisierende Strahlung IS" Gammastrahlung GS auf und keine Betastrahlung. Somit trägt die, insbesondere energiereiche, Betastrahlung BS nicht zu der gemessenen anderen Intensität I" oder der gemessenen anderen Messgröße beziehungsweise anderen Zählrate Z" bei. Somit kann der Beitrag der Gammastrahlung GS zu der gemessenen Intensität I oder der gemessenen Messgröße beziehungsweise Zählrate Z berücksichtigt werden, insbesondere durch berücksichtigen der gemessenen anderen Intensität I" oder der gemessenen anderen Messgröße beziehungsweise anderen Zählrate Z". Somit ist die Bestimmung der Aktivität A oder der Bestimmungsgröße sA von Betastrahlern 2, insbesondere Sr-90/Y-90, aussendend energiereiche Betastrahlung BS, insbesondere zusätzlich mit dem Messen der Materialprobe 1 mit dem Absorber 11, besonders genau.

Außerdem bestehen im gezeigten Ausführungsbeispiel der Absorber 10 und der andere Absorber 11 vollständig aus Aluminium. In alternativen Ausführungsbeispielen können/kann der Absorber und/oder der andere Absorber teilweise oder vollständig aus Aluminium und/oder Kupfer bestehen.

Weiter weist das Verfahren den Schritt auf: Bestimmen eines Kalibrierfaktors K10 für den Absorber 10 mit der Absorber-Dicke T10. Der Schritt b) weist auf: Bestimmen der Aktivität A oder der von der Aktivität abhängigen Bestimmungsgröße sA von Betastrahlern 2, insbesondere von Sr-90/Y-90, aussendend energiereiche Betastrahlung BS basierend auf dem bestimmten Kalibrierfaktor K10.

Im Fig. 3 wird der Kalibrierfaktor K10 durch Messen der Kalibrierintensität IK oder einer von der Kalibrierintensität abhängigen Kalibriermessgröße, insbesondere einer Kalibrierzählrate ZK, von, insbesondere transmittierter, kalibrierter ionisierender Strahlung ISK aufweisend transmittierte Betastrahlung tBS ausgesendet von der Kalibrierprobe 1K von Sr-90/Y-90, insbesondere mit einer bekannten Kalibrieraktivität AK, durch den Absorber 10 hindurch bestimmt, insbesondere mittels der Vorrichtung 50 beziehungsweise ihrer Messeinrichtung 60 und ihrer Bestimmungseinrichtung 70.

Zudem ist im gezeigten Ausführungsbeispiel eine Proben-Dicke T1, insbesondere in der Messrichtung z, der Materialprobe 1 1 mm. In alternativen Ausführungsbeispielen kann die Proben-Dicke der Materialprobe minimal 0,2 mm und/oder maximal 2 mm sein.

Des Weiteren ist im gezeigten Ausführungsbeispiel eine Proben-Fläche A1, insbesondere orthogonal zu der Messrichtung z, der Materialprobe 1 31416 mm². In alternativen Ausführungsbeispielen kann die Proben-Fläche der Materialprobe minimal 2000 mm² und/oder maximal 100000 mm² sein. Insbesondere ist im gezeigten Ausführungsbeispiel die Materialprobe 1 kreisrund. Des Weiteren hat die Materialprobe 1 einen Durchmesser D1 von 200 mm.

Außerdem ist im gezeigten Ausführungsbeispiel die Materialprobe in Form von Pulver. Das Pulver ist mittels einer beziehungsweise durch eine Folie fixiert.

Weiter weist das Verfahren den Schritt auf: Bestimmen einer Proben-Masse m1 der Materialprobe 1. Der Schritt b) weist auf: Bestimmen einer spezifischen Aktivität sA oder einer von der spezifischen Aktivität abhängigen Bestimmungsgröße von Betastrahlern 2, insbesondere Sr-90/Y-90, aussendend energiereiche Betastrahlung BS basierend auf der bestimmten Proben-Masse m1, insbesondere mittels der Vorrichtung 50 beziehungsweise ihrer Bestimmungseinrichtung 70.

Im gezeigten Ausführungsbeispiel ist die Proben-Masse m1 62,8 g. Insbesondere besteht im gezeigten Ausführungsbeispiel die Materialprobe 1 teilweise oder vollständig aus Beton, insbesondere mit einer Dichte von 2000 Kilogramm pro Kubikmeter (kg/m³).

Zudem weist das Verfahren die Schritte auf: c) Vergleichen der bestimmten Aktivität A oder der von der Aktivität abhängigen Bestimmungsgröße beziehungsweise der spezifischen Aktivität sA mit einem Freigabegrenzwert FG, insbesondere mittels der Vorrichtung 50 beziehungsweise ihrer Bestimmungseinrichtung 70, wie in Fig. 1 gezeigt. d) bei Unterschreitung oder Erreichung des Freigabegrenzwerts FG durch die Aktivität A oder die von der Aktivität abhängigen Bestimmungsgröße beziehungsweise der spezifischen Aktivität sA Freigeben der Materialprobe 1 und/oder bei Überschreitung des Freigabegrenzwerts FG durch die Aktivität A oder die von der Aktivität abhängigen Bestimmungsgröße beziehungsweise der spezifischen Aktivität sA Nicht-Freigeben der Materialprobe 1, insbesondere mittels der Vorrichtung 50 beziehungsweise ihrer Bestimmungseinrichtung 70.

Im gezeigten Ausführungsbeispiel ist der Freigabegrenzwert FG 0,6 Bq/g.

Im Detail weist die Vorrichtung 50 einen Low-Level Messplatz mit der Messeinrichtung 60 in Form eines ultraflachen Durchfluss-Proportionalzählrohrs auf oder ist ein solcher. In alternativen Ausführungsbeispielen braucht die Vorrichtung keinen Low-Level Messplatz aufweisen.

Des Weiteren weist die Vorrichtung 50 eine Messschale, insbesondere in einem ausziehbaren Schieber, für die Materialprobe 1 auf. In alternativen Ausführungsbeispielen braucht die Vorrichtung keine Messschale aufweisen.

Außerdem ist im gezeigten Ausführungsbeispiel der Absorber 10 oder der andere Absorber 11, insbesondere direkt, über der Materialprobe 1 beziehungsweise der Messschale angeordnet. Anders formuliert: der Absorber 10 oder der andere Absorber 11 ist über die Materialprobe 1 gelegt. Die Messeinrichtung 60 ist, insbesondere direkt, über dem Absorber 10 oder dem anderen Absorber 11 angeordnet.

Weiter weist die Vorrichtung 50 einen Vetodetektor 80 auf. Im gezeigten Ausführungsbeispiel ist der Vetodetektor 80, insbesondere direkt, über der Messeinrichtung 60 angeordnet. In anderen Worten: die Messeinrichtung 60 wird, insbesondere in Fig. 1, oben von dem Vetodetektor 80 abgedeckt, der als gemeinsamer Schirm dient. Der Vetodetektor 80 ist mit der Messeinrichtung 60 in Antikoinzidenz geschaltet, um einen möglichen Untergrund durch kosmische Strahlung beziehungsweise Höhenstrahlung zu unterdrücken beziehungsweise zu eliminieren. In alternativen Ausführungsbeispielen braucht die Vorrichtung keinen Vetodetektor aufweisen.

Zudem weist die Vorrichtung 50 eine, insbesondere allseitig 10 Zentimeter starke, Abschirmung 85 auf, die insbesondere im Wesentlichen aus Normbleiziegeln besteht. Im gezeigten Ausführungsbeispiel umgibt die Abschirmung 85 die Materialprobe 1 beziehungsweise die Messschale, den Absorber 10 oder den anderen Absorber 11, die Messeinrichtung 60 und den Vetodetektor 80, soweit vorhanden. Somit kann ein möglicher Untergrund durch Umgebungsstrahlung unterdrückt beziehungsweise eliminiert werden. In alternativen Ausführungsbeispielen braucht die Vorrichtung keine Abschirmung aufweisen.

Des Weiteren weist das Verfahren den Schritt auf: Messen einer Null-Intensität I''' oder einer von der Null-Intensität abhängigen Null-Messgröße, insbesondere einer Null-Zählrate Z''', von ionisierender Strahlung IS''' ohne Probe mit dem Absorber 10, insbesondere mittels der Vorrichtung 50 beziehungsweise ihrer Messeinrichtung 60, wie in Fig. 4 gezeigt. Der Schritt b) weist auf: Bestimmen der Aktivität A oder der von der Aktivität abhängigen Bestimmungsgröße sA von Betastrahlern 2, insbesondere Sr-90/Y-90, aussendend energiereiche Betastrahlung BS berücksichtigend, insbesondere subtrahierend, die gemessene Null-Intensität I''' oder die gemessene Null-Messgröße beziehungsweise Null-Zählrate Z''', insbesondere mittels der Vorrichtung 50 beziehungsweise ihrer Bestimmungseinrichtung 70. Somit kann ein möglicher Untergrund durch Umgebungsstrahlung und/oder ein, insbesondere elektronisches, Rauschen unterdrückt beziehungsweise eliminiert werden.

Im gezeigten Ausführungsbeispiel hat die Vorrichtung 50 beziehungsweise ihre Messeinrichtung 60 eine Nachweisgrenze von besser als 0,083 Bq, insbesondere beim Messen von 50 bis 200, insbesondere 100, Teilchen, insbesondere Betateilchen, und/oder bei einer Messzeit in einem Bereich von 10 Minuten (min) bis 60 min, insbesondere 30 min. Außerdem weist im gezeigten Ausführungsbeispiel der Absorber 10 den Transmissionsgrad gleich oder größer als 1 % für die energiereiche Betastrahlung BS auf. Weiter braucht oder kann im gezeigten Ausführungsbeispiel nicht alle energiereiche Betastrahlung BS von der Materialprobe 1 in Messrichtung z zu der Messeinrichtung 60 ausgesendet werden, insbesondere aufgrund der räumlichen Anordnung. Insbesondere wird, insbesondere nur, 50 % der energiereichen Betastrahlung BS von der Materialprobe 1 in Messrichtung z zu der Messeinrichtung 60 ausgesendet. Somit braucht oder muss für ein Signal-Rausch-Verhältnis größer 1 die Aktivität A von Betastrahlern 2, insbesondere von Sr-90/Y-90, aussendend die energiereiche Betastrahlung BS größer 16,6 Bq sein. Im gezeigten Ausführungsbeispiels ist dies für die Proben-Masse m1 62,8 g und den Freigabegrenzwert FG 0,6 Bq/g mit einem Produkt 37,7 Bq problemlos möglich.

Im gezeigten Ausführungsbeispiel ist die Aktivität A von Betastrahlern 2, insbesondere von Sr-90/Y-90, aussendend die energiereiche Betastrahlung BS größer als 37,7 Bq und somit wird der Freigabegrenzwert FG durch die Aktivität A beziehungsweise die spezifische Aktivität sA überschritten. Somit wird die Materialprobe 1 nicht freigegeben.

In alternativen Ausführungsbeispielen kann die Aktivität von Betastrahlern, insbesondere von Sr-90/Y-90, aussendend die energiereiche Betastrahlung gleich oder kleiner als 37,7 Bq sein und somit kann der Freigabegrenzwert durch die Aktivität beziehungsweise die spezifische Aktivität erreicht oder unterschritten werden. Somit kann die Materialprobe freigegeben werden.

Des Weiteren kann das zuvor beschriebene Verfahren durch Messen der Materialprobe, und insbesondere der Kalibrierprobe, mit mindestens einem weiteren Absorber mit mindestens einer weiteren Absorber-Dicke energiereiche Betastrahlung mindestens teilweise transmittierend erweitert werden. Dies kann eine besonders präzise Bestimmung der Aktivität oder der Bestimmungsgröße von Betastrahlern aussendend energiereiche Betastrahlung ermöglichen. Insbesondere können, insbesondere weitere, Intensitäten oder Messgrößen durch einen Fit an ein erwartbares Absorberverhalten, insbesondere beschrieben durch die Berger-Seltzer-Formel, und/oder durch Mittelwertbildung, insbesondere für die Bestimmung der Aktivität oder der Bestimmungsgröße, analysiert werden.

Außerdem weist die Vorrichtung 50 eine Ausgabeeinrichtung 90 und/oder eine Eingabeeinrichtung 95 auf. Die Ausgabeeinrichtung 90 ist zum Ausgeben eines Ergebnisses des Verfahrens ausgebildet, insbesondere der bestimmten Aktivität A, der bestimmten Bestimmungsgröße beziehungsweise der spezifischen Aktivität sA, des Freigebens und/oder des Nicht-Freigebens. Die Eingabeeinrichtung 95 ist zum Eingeben ausgebildet, insbesondere des Absorbers 10, der Absorber-Dicke T10, der Betastrahler 2, insbesondere von Sr-90/Y-90, aussendend energiereiche Betastrahlung BS, des anderen Absorbers 11, der anderen Absorber-Dicke T11, des Materials des Absorbers 10 und/oder des anderen Absorbers 11, der Proben-Dicke T1, der Probenfläche A1, der Proben-Masse m1, des Freigabegrenzwerts FG, der Kalibrierprobe 1K und/oder der Kalibrieraktivität AK. Im gezeigten Ausführungsbeispiel bilden die Ausgabeeinrichtung 90 und die Eingabeeinrichtung 95 eine kombinierte Aus- und Eingabeeinrichtung. In alternativen Ausführungsbeispielen braucht die Vorrichtung keine Ausgabeeinrichtung und/oder keine Eingabeeinrichtung aufweisen.

Wie die gezeigten und oben erläuterten Ausführungsbeispiele deutlich machen, stellt die Erfindung ein vorteilhaftes Verfahren zum Messen einer Materialprobe auf Betastrahler aussendend energiereiche Betastrahlung und eine vorteilhafte Vorrichtung zum Messen einer Materialprobe auf Betastrahler aussendend energiereiche Betastrahlung bereit, das und die, insbesondere jeweils, einen relativ einfachen und/oder zeitlich relativ schnellen und somit relativ kostengünstigen Nachweis von Betastrahlern aussendend energiereiche Betastrahlung ermöglichen.

## Patentansprüche

1. Verfahren zum Messen einer Materialprobe (1) auf Betastrahler (2) aussendend energiereiche Betastrahlung (BS) mit einer Betaendpunktenergie (EE) gleich oder höher als ein Betaendpunktenergiegrenzwert (EEG), wobei das Verfahren die Schritte aufweist:
- a) Messen einer Intensität (I) oder einer von der Intensität abhängigen Messgröße (Z) von ionisierender Strahlung (IS) aufweisend transmittierte Betastrahlung (tBS) ausgesendet von der Materialprobe (1) durch einen Absorber (10) hindurch, wobei eine Absorber-Dicke (T10) des Absorbers (10) derart ist, dass der Absorber (10) energiereiche Betastrahlung (BS) mindestens teilweise transmittiert und energiearme Betastrahlung (BS') mit einer Betaendpunktenergie (EE') kleiner als der Betaendpunktenergiegrenzwert (EEG) stärker absorbiert als energiereiche Betastrahlung (BS), und
- b) Bestimmen einer Aktivität (A) oder einer von der Aktivität abhängigen Bestimmungsgröße (sA) von Betastrahlern (2) aussendend energiereiche Betastrahlung (BS) basierend auf der gemessenen Intensität (I) oder der gemessenen Messgröße (Z).

2. Verfahren nach Anspruch 1,
- wobei das Verfahren zum Messen der Materialprobe (1) auf Yttrium-90 (Y-90) und/oder Kalium-40 (K-40) ist.

3. Verfahren nach einem der vorhergehenden Ansprüche,
- wobei der Betaendpunktenergiegrenzwert (EEG) minimal 1175 keV ist, insbesondere minimal 1200 keV, insbesondere minimal 1300 keV, insbesondere minimal 1505 keV, insbesondere minimal 1600 keV, insbesondere minimal 1800 keV, insbesondere minimal 2000 keV.

4. Verfahren nach einem der vorhergehenden Ansprüche,
- wobei das Verfahren den Schritt aufweist: Messen einer anderen Intensität (I") oder einer anderen von der anderen Intensität abhängigen Messgröße (Z") von ionisierender Strahlung (IS") ausgesendet von der Materialprobe (1) durch einen anderen Absorber (11) hindurch, wobei eine andere Absorber-Dicke (T11) des anderen Absorbers (11) derart dicker als die Absorber-Dicke (T10) des Absorbers (T10) ist, dass der andere Absorber (11) energiereiche Betastrahlung (BS) absorbiert und Gammastrahlung (GS) mindestens teilweise transmittiert, und
- wobei der Schritt b) aufweist: Bestimmen der Aktivität (A) oder der von der Aktivität abhängigen Bestimmungsgröße (sA) von Betastrahlern (2) aussendend energiereiche Betastrahlung (BS) berücksichtigend die gemessene andere Intensität (I") oder die gemessene andere Messgröße (Z").

5. Verfahren nach einem der vorhergehenden Ansprüche,
- wobei die Absorber-Dicke (T10) des Absorbers (10) minimal 0,5 mm, insbesondere minimal 1 mm, und/oder maximal 4 mm ist, insbesondere maximal 3 mm, insbesondere 2 mm, und/oder
- wobei die andere Absorber-Dicke (T11) des anderen Absorbers (11) dicker als 4 mm, insbesondere minimal 5 mm, und/oder maximal 8 mm ist, insbesondere maximal 7 mm, insbesondere 6 mm.

6. Verfahren nach einem der vorhergehenden Ansprüche,
- wobei der Absorber (10) und/oder der andere Absorber (11) teilweise oder vollständig aus Aluminium und/oder Kupfer bestehen/besteht.

7. Verfahren nach einem der vorhergehenden Ansprüche,
- wobei eine Proben-Dicke (T1) der Materialprobe (1) minimal 0,1 mm, insbesondere minimal 0,2 mm, und/oder maximal 2 mm ist, insbesondere maximal 1 mm, insbesondere 0,5 mm.

8. Verfahren nach einem der vorhergehenden Ansprüche,
- wobei eine Proben-Fläche (A1) der Materialprobe (1) minimal 2000 mm² und/oder maximal 100000 mm² ist.

9. Verfahren nach einem der vorhergehenden Ansprüche,
- wobei das Verfahren den Schritt aufweist: Bestimmen einer Proben-Masse (m1) der Materialprobe (1), und
- wobei der Schritt b) aufweist: Bestimmen einer spezifischen Aktivität (sA) oder einer von der spezifischen Aktivität abhängigen Bestimmungsgröße von Betastrahlern (2) aussendend energiereiche Betastrahlung (BS) basierend auf der bestimmten Proben-Masse (m1).

10. Verfahren nach einem der vorhergehenden Ansprüche, wobei das Verfahren die Schritte aufweist:
- c) Vergleichen der bestimmten Aktivität (A) oder der von der Aktivität abhängigen Bestimmungsgröße (sA) mit einem Freigabegrenzwert (FG) und
- d) bei Unterschreitung oder Erreichung des Freigabegrenzwerts (FG) durch die Aktivität (A) oder die von der Aktivität abhängigen Bestimmungsgröße (sA) Freigeben der Materialprobe (1) und/oder bei Überschreitung des Freigabegrenzwerts (FG) durch die Aktivität (A) oder die von der Aktivität abhängigen Bestimmungsgröße (sA) Nicht-Freigeben der Materialprobe (1).

11. Verfahren nach Anspruch 10,
- wobei der Freigabegrenzwert (FG) 0,6 Bq/g ist.

12. Verfahren nach einem der vorhergehenden Ansprüche,
- wobei das Verfahren den Schritt aufweist: Bestimmen eines Kalibrierfaktors (K10) für den Absorber (10) mit der Absorber-Dicke (T10), und
- wobei der Schritt b) aufweist: Bestimmen der Aktivität (A) oder der von der Aktivität abhängigen Bestimmungsgröße (sA) von Betastrahlern (2) aussendend energiereiche Betastrahlung (BS) basierend auf dem bestimmten Kalibrierfaktor (K10).

13. Verfahren nach einem der vorhergehenden Ansprüche,
- wobei die Materialprobe (1) in Form von Pulver ist, und
- wobei das Pulver (1) mittels einer Folie (40) fixiert ist.

14. Vorrichtung (50) zum Messen einer Materialprobe (1) auf Betastrahler (2) aussendend energiereiche Betastrahlung (BS) mit einer Betaendpunktenergie (EE) gleich oder höher als ein Betaendpunktenergiegrenzwert (EEG), wobei die Vorrichtung (50) aufweist:
- einen Absorber (10), wobei eine Absorber-Dicke (T10) des Absorbers (10) derart ist, dass der Absorber (10) energiereiche Betastrahlung (BS) mindestens teilweise transmittiert und energiearme Betastrahlung (BS') mit einer Betaendpunktenergie (EE') kleiner als der Betaendpunktenergiegrenzwert (EEG) stärker absorbiert als energiereiche Betastrahlung (BS),
- eine Messeinrichtung (60), wobei die Messeinrichtung (60) zum Messen einer Intensität (I) oder einer von der Intensität abhängigen Messgröße (Z) von ionisierender Strahlung (IS) aufweisend transmittierte Betastrahlung (tBS) ausgesendet von der Materialprobe (1) durch den Absorber (10) hindurch ausgebildet ist, und
- eine Bestimmungseinrichtung (70), wobei die Bestimmungseinrichtung (70) zum Bestimmen einer Aktivität (A) oder einer von der Aktivität abhängigen Bestimmungsgröße (sA) von Betastrahlern (2) aussendend energiereiche Betastrahlung (BS) basierend auf der gemessenen Intensität (I) oder der gemessenen Messgröße (Z) ausgebildet ist.
